Europäisches Patentamt

European Patent Office

Office européen des brevets

(19)

(11) Veröffentlichungsnummer: **0 250 716**

**B1**

(12) **EUROPÄISCHE PATENTSCHRIFT**

(45) Veröffentlichungstag der Patentschrifft:
07.02.90

(21) Anmeldenummer: 87103877.4

(22) Anmeldetag: 17.03.87

(51) Int. Cl. $^5$: **B 60 K 11/08**, B 62 D 35/00

(54) Mit Lufteintritt zur Motorkühlung versehene Luftleitvorrichtung am Heck eines Fahrzeuges.

(30) Priorität: 09.05.86 DE 3615584

(43) Veröffentlichungstag der Anmeldung:
07.01.88 Patentblatt 88/01

(45) Bekanntmachung des Hinweises auf die Patenterteilung:
07.02.90 Patentblatt 90/06

(84) Bennante Vertragsstaaten:
DE ES FR GB IT

(56) Entgegenhaltungen:
DE-A-2 851 639
DE-A-3 003 565
DE-A-3 019 150
DE-C-732 596
GB-A-1 384 992
US-A-3 791 468

Zeitschrift MOT, Nr. 17, 1984, Seite 79

(73) Patentinhaber: Dr.Ing.h.c. F. Porsche Aktiengesellschaft
Porschestrasse 42
D-7000 Stuttgart 40 (DE)

(72) Erfinder: Burst, Hermann, Dipl.-Ing.
Telemannstrasse 4
D-7255 Rutesheim (DE)
Erfinder: Durm, Jürgen, Dipl.-Ing.
Wolf-Hirth-Strasse 4
D-7257 Ditzingen (DE)
Erfinder: Kretschmer, Helmut, Dipl.-Ing.
Blumstrasse 41
D-8751 Bessenbach 2 (DE)
Erfinder: Schuhmann, Georg
Neuköllner Strasse 9
D-7250 Leonberg (DE)

## Beschreibung

Die Erfindung bezieht sich auf ein Kraftfahrzeug, insbesondere einen Personenwagen, mit einem Kühler und einer im Heckbereich angeordneten Luftleitvorrichtung, wobei mittels eines Gebläses des Heckmotors Kühlluft angesaugt wird und durch Lufteintrittsöffnungen der Luftleitvorrichtung zu einem darunterliegenden Kühler strömt.

In der Zeitschrift "MOT, Nr. 17/1984", Seite 79, ist ein Fahrzeug mit einem Heckmotor dargestellt, das an der Heckoberseite eine feststehend ausgebildete Luftleitvorrichtung (Spoiler) aufweist. Diese Luftleitvorrichtung ist mit Lufteintrittsöffnungen versehen, durch die mittels eines Gebläses des Motors Kühlluft zu einem unterhalb der Luftleitvorrichtung angeordneten Kühler angesaugt wird.

Aus der DE-A-2 851 639 ist ein Personenwagen mit einer im Heckbereich angeordneten Luftleitvorrichtung bekannt, wobei die Luftleitvorrichtung mittels einer Verstelleinrichtung von einer bündig mit dem angrenzenden Aufbau verlaufenden Ruhestellung an eine ausgefahrene Betriebsstellung bewegbar ist.

Wenn nun ein Fahrzeug mit einem Heckmotor und einem heckseitig angeordneten Kühler mit einer verstellbaren Luftleitvorrichtung gemäß der DE-A-2 851 639 ausgestattet wird, dann würde der Kühler bei ausgefahrener Luftleitvorrichtung nur unzureichend mit Kühlluft beaufschlagt, da keine definierte Luftführung vorgesehen ist. Ferner würden durch den im Heckbereich vorhandenen Unterdruck Abgase und Schmutz durch die Spaltbereiche zwischen Luftleitvorrichtung und Aufbau mittels des Gebläses angesaugt und in den Heizungskreislauf weitergeleitet. Darüber hinaus wären bei ausgefahrener Betriebsstellung die unterhalb der Luftleitvorrichtung liegenden Aggregate (Kühler, Gebläse) von außen sichtbar.

Aufgabe der Erfindung ist es, an einem Fahrzeug mit einem Heckmotor im Heckbereich eine verstellbare Luftleitvorrichtung anzuordnen, wobei solche Vorkehrungen getroffen sind, daß einerseits stets eine funktionsgerechte Beaufschlagung des Kühlers mit Kühlluft sichergestellt ist und daß andererseits das Ansaugen von Abgasen oder Schmutz durch das Gebläse zuverlässig unterbunden wird.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Abdeckelemente zwischen der Luftleitvorrichtung und dem Aufbau auch in ausgefahrener Betriebsstellung der Luftleitvorrichtung eine optimierte Beaufschlagung des Kühlers mit Kühlluft erfolgt. Außerdem werden wegen der Abdeckelemente keine Abgase bzw. Schmutzpartikel mehr durch das Gebläse angesaugt. Schließlich bewirken die Abdeckelemente, daß die unterhalb der Heckhaube liegenden Aggregate (Kühler, Gebläse) von der Fahrzeugaußenseite her nicht sichtbar sind (Sichtschutz).

Ein Ausführungsbeispiel der Erfindung ist in der Zeichnung dargestellt und wird im folgenden näher erläutert. Es zeigt

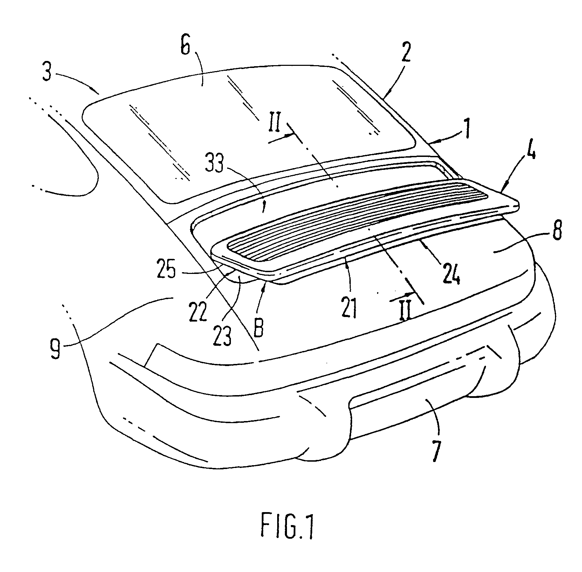

Fig. 1  eine Schrägansicht von hinten auf den Heckbereich eines Personenwagens mit einer Luftleitvorrichtung,

Fig. 2  einen Schnitt nach der Linie II-II der Fig. 1 in größerem Maßstab,

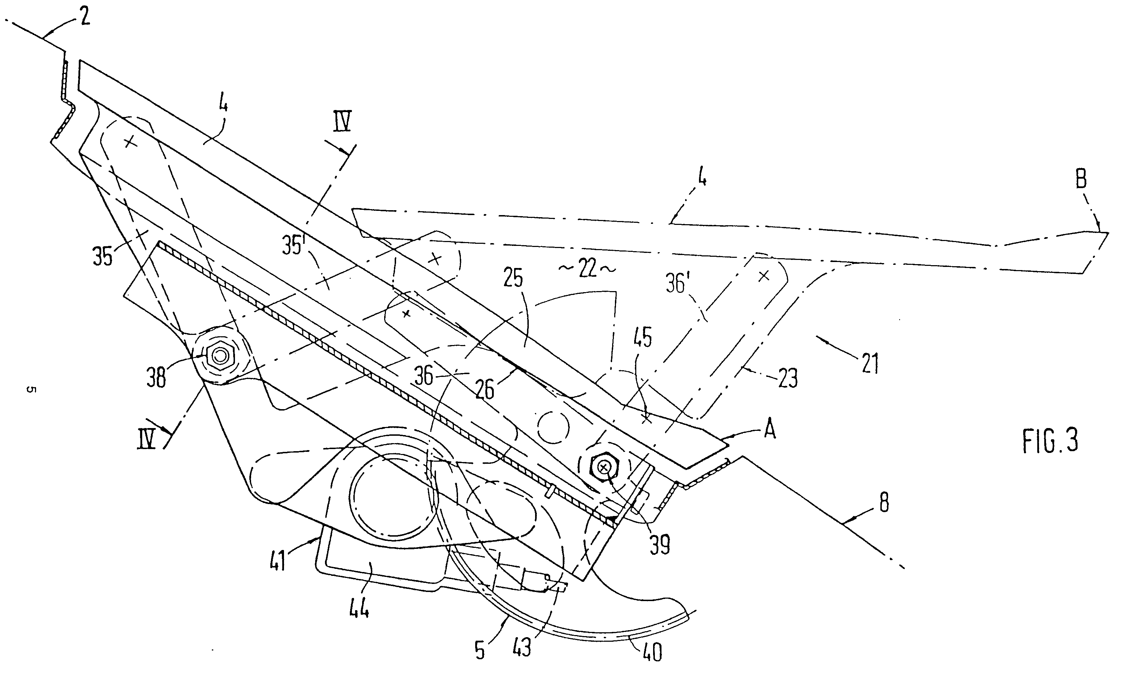

Fig. 3  eine Ansicht in Pfeilrichtung R der Fig. 1 in größerem Maßstab,

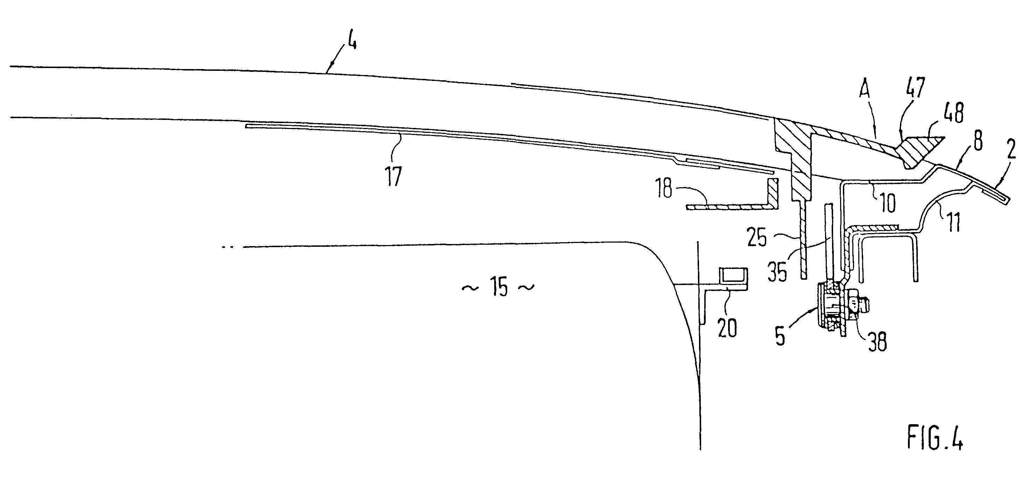

Fig. 4  einen Schnitt nach der Linie IV-IV der Fig. 3 in größerem Maßstab,

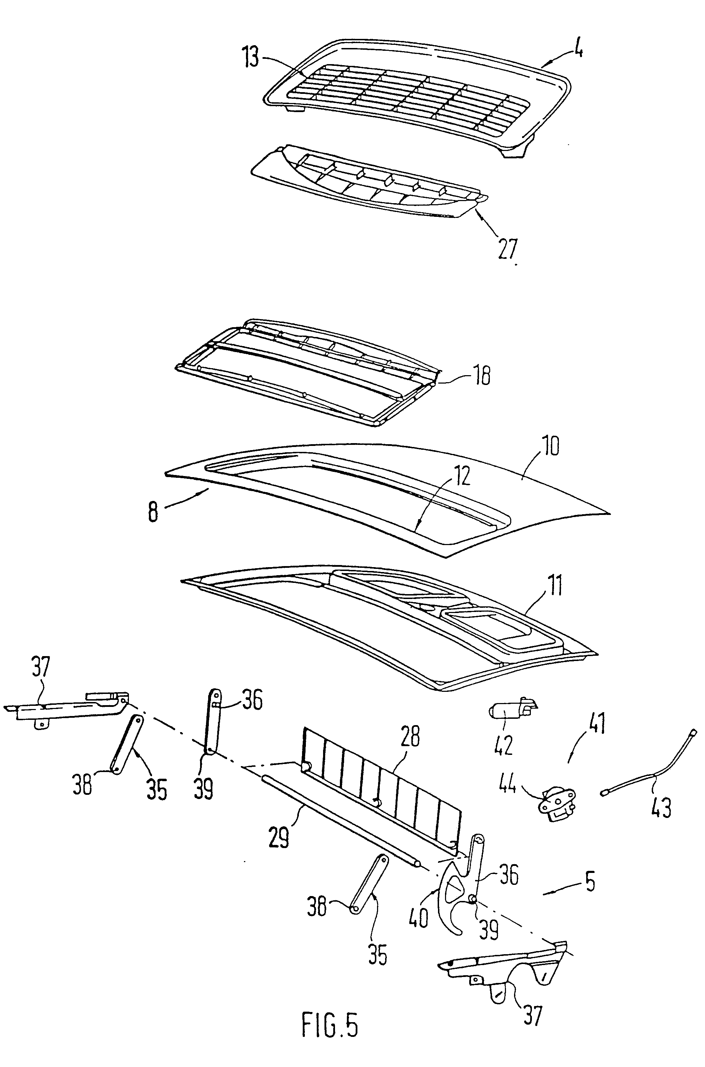

Fig. 5  eine perspektivische Ansicht der Bauteile der Heckhaube und der Luftleitvorrichtung zusammen mit der Betätigungseinrichtung.

Der Personenwagen 1 umfaßt einen Aufbau 2 mit einer im Heckbereich 3 angeordneten Luftleitvorrichtung 4, die mittels einer Verstelleinrichtung 5 von einer bündig mit dem angrenzenden Aufbau 2 verlaufenden Ruhestellung A in eine ausgefahrene Betriebsstellung B bewegbar ist. Durch die Luftleitvorrichtung 4 wird einerseits der Luftwiderstandsbeiwert des Personenwagens 1 herabgesetzt und andererseits im Fahrbetrieb der dynamische Hinterraddruck vergrößert (Abtrieb).

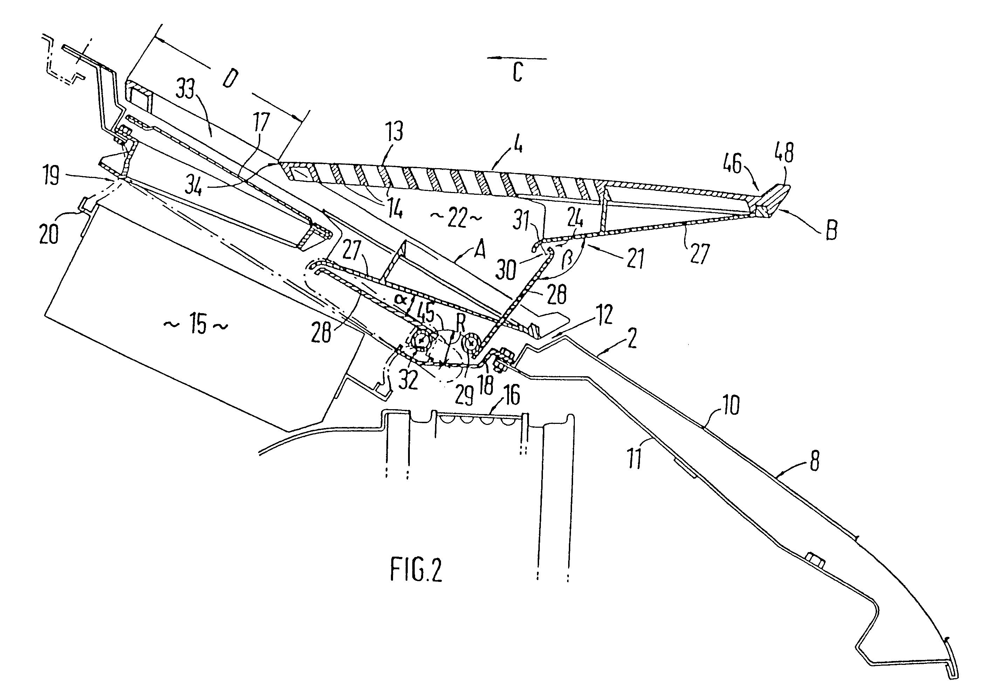

Im Heckbereich 3 setzt sich der Aufbau 2 aus einer Heckscheibe 6, einem Stoßfänger 7 und einer Heckhaube 8 zusammen, die zwischen Seitenteilen 9 angeordnet ist. Die aus einem Außenteil 10 und einem inneren Versteifungsrahmen 11 gebildete Heckhaube 8 weist eine etwa rechteckförmige Öffnung 12 auf, in die die Luftleitvorrichtung 4 eingesetzt ist (Fig. 2). In der Ruhestellung A verläuft die klappen- bzw. spoilerartig ausgebildete Luftleitvorrichtung 4 außenhautbündig mit der Kontur des fließheckartig ausgestalteten Heckbereichs 3, wogegen sie in der Betriebsstellung B aus der Karosserieebene herausgeschwenkt ist, dergestalt, daß ihre außenliegende Anströmfläche etwa horizontal angestellt ist. Gleichzeitig wird die Luftleitvorrichtung 4 entgegen der Fahrtrichtung C um ein Maß D nach hinten verschoben.

Die Luftleitvorrichtung 4 weist ein großflächiges Lufteinlaßgitter 13 auf, das mehrere Querstreben 14 besitzt. Unter der Heckhaube 8 bzw. der Luftleitvorrichtung 4 ist ein Kühler 15 und ein Gebläse 16 angeordnet. In der Ruhestellung A der Luftleitvorrichtung 4 gelangt die vom Gebläse 16 angesaugte Luft aus dem Unterdruckgebiet des Heckbereichs 3 durch das Lufteinlaßgitter 13 zum Kühler 15. In Strömungsrichtung der Kühlluft gesehen, ist unmittelbar nach dem Lufteinlaßgitter 11 ein feinmaschiges Gitter 17 vorgesehen. Das Gitter 17 ist auf einen Abdichtrahmen 18 aufgesetzt, der in die Öffnung 12 eingesetzt und mit der Heckhaube 8 verschraubt ist. Damit dem Kühler 13 ausreichend Kühlluft zugeführt wird, ist zwischen dem Kühler 13 und dem angrenzenden Aufbau 2 eine lippenförmige Dichtung 19 vorgesehen. Die Dichtung 19 ist in einen am Kühler 15 befestigten Aufnahmerahmen 20 eingesetzt und liegt mit ihrem freien Ende unter Vorspannung am Abdichtrahmen 18 an.

In der ausgefahrenen Betriebsstellung B der Luftleitvorrichtung 4 verläuft diese mit Abstand zum darunterliegenden Aufbau 2, wodurch zwischen Luftleitvorrichtung 4 und Aufbau 2 ein Spalt gebildet wird. Um zu vermeiden, daß Auspuffgase und Schmutzpartikel - durch den im Heckbereich 3 herrschenden Unterdruck - durch das Gebläse 16 angesaugt werden, sind ein - in Fahrtrichtung gesehen - hintenliegender, querverlaufender Spaltbereich 21 und die beiden seitlich außenliegenden, längsverlaufenden Spaltbereiche 22 zwischen der Luftleitvorrichtung 4 und dem Aufbau 2 in ausgefahrener Betriebsstellung B der Luftleitvorrichtung 4 durch Abdeckelemente 23, 24 verschlossen.

Die Abdeckelemente 23 für die seitlichen Spaltbereiche 22 werden durch nach unten abgestellte Wandabschnitte 25 der Luftleitvorrichtung 4 gebildet. Jedes seitliche Abdeckelement 23 erstreckt sich lediglich in einem in Fahrtrichtung gesehen vorneliegenden Bereich der Luftleitvorrichtung 4. Eine Unterkante 26 der Abdeckelemente 23 verläuft etwa in der Höhe des Aufnahmerahmens 20.

Das Abdeckelement 24 für den hinteren Spaltbereich 21 besteht aus zwei gelenkig miteinander verbundenen Teilen 27, 28, wobei ein Teil 27 an der Luftleitvorrichtung 4 und das andere Teil 28 an einem Querrohr 29 der Verstelleinrichtung 5 befestigt ist. Die beiden Teile 27, 28 sind vorzugsweise aus Kunststoff gefertigt.

Das der Luftleitvorrichtung 4 zugekehrte Teil 27 des Abdeckelementes 24 ist entweder durch Kleben, Klipsen oder dergleichen mit diesem verbunden oder es ist einstückig mit der Luftleitvorrichtung 4 ausgebildet. Die beiden Teile 27, 28 des Abdeckelementes 24 sind durch ein Scharnier 30 drehbar miteinander verbunden, dessen Achse 31 in Fahrzeugquerrichtung verläuft und etwa horizontal ausgerichtet ist. In Ruhestellung A sind die beiden Teile 27, 28 des Abdeckelementes 22 übereinanderliegend angeordnet und verlaufen unter einem spitzen Winkel α zueinander. In der ausgefahrenen Betriebsstellung B nehmen die beiden Teile 27, 28 des Abdeckelementes 22 einen stumpfen Winkel β zueinander ein. Das Teil 27 verläuft dabei aufrecht und ist derart geneigt, daß die Achse des Scharniers 30 - in Fahrtrichtung gesehen - weiter hinten liegt als die Achse des Querrohres 29. Das dem Querrohr 29 zugewandte Ende des Teils 27 ist über eine Klipsverbindung 32 mit dem Querrohr 29 verbunden. Das Querrohr 29 ist dabei zwischen zwei Rastelementen des Teils 28 aufgenommen.

Bei ausgefahrener Betriebsstellung B der Luftleitvorrichtung 4 kann die Kühlluft also nur durch die vor der Luftleitvorrichtung 4 liegenden Öffnung 33 zum Kühler 15 hindurchströmen. An der Vorderkante 34 der Luftleitvorrichtung 4 bildet sich in ausgefahrener Betriebsstellung B ein höheres Druckniveau (Vorstauwirkung), wodurch mehr Kühlluft angesaugt und somit eine verbesserte Kühlung erzielt wird.

Die Verstellvorrichtung 5 umfaßt auf jeder Längsseite der Luftleitvorrichtung 4 zwei Lenker 35, 36, die einerseits mit der Luftleitvorrichtung 4 und andererseits mit einer deckelseitig befestigten Schiene 37 drehbar verbunden sind und eine Viergelenkanordnung bilden. Die Drehpunkte 38, 39 sind dabei feststehend ausgebildet. Die Bezugszeichen 35', 36' kennzeichnen die ausgefahrene Stellung der Lenker 35, 36.

Die in Fahrtrichtung gesehen hintenliegend angeordneten Lenker 36 sind durch das Querrohr 29 miteinander verbunden. Einer der beiden hintenliegenden Lenker 36 weist ein Zahnsegment 40 auf, das mit einer Antriebseinrichtung 41 zusammenwirkt. Die Antriebseinrichtung 41 umfaßt einen Elektromotor 42, eine biegsame Welle 43 und ein Schneckengetriebe 44, das mit den Zahnsegmenten 40 der Verstelleinrichtung 5 in Eingriff steht. Das Schneckengetriebe 44 ist an der benachbarten Schiene 37 angeflanscht.

Das Querrohr 29 ist oberhalb des Drehpunktes 39 mit dem Lenker 36 verbunden, so daß das Querrohr 29 bei der Verstellbewegung der Luftleitvorrichtung 4 sich entlang eines Kreisbogens 45 mit dem Radius R bewegt.

Die Luftleitvorrichtung 4 weist an ihrem hintenliegenden Ende 46 und an ihren beiden Längsseiten 47 jeweils nach oben ragende, spoilerartige Anformungen 48 auf.

**Patentansprüche**

1. Kraftfahrzeug, insbesondere Personenwagen (1) mit einem Heckmotor und einer im Heckbereich (3) angeordneten Luftleitvorrichtung (4), wobei mittels eines Gebläses des Heckmotors Kühlluft angesaugt wird und durch Lufteintrittsöffnungen (13) der Luftleitvorrichtung zu einem darunterliegenden Kühler strömt, dadurch gekennzeichnet, daß die Luftleitvorrichtung (4) in an sich bekannter Weise von einer bündig mit dem angrenzenden Aufbau (2) verlaufenden Ruhestellung (A) in eine ausgefahrene Betriebsstellung (B) bewegbar ist, wobei die Luftleitvorrichtung (4) in ihrer Betriebsstellung (B) mit Abstand zum Aufbau (2) verläuft und daß ein in Fahrtrichtung gesehen hintenliegender, querverlaufender Spaltbereich (21) und seitlich außenliegende, längsverlaufende Spaltbereiche (22) zwischen der Luftleitvorrichtung (4) und dem Aufbau (2) in ausgefahrener Betriebsstellung (B) der Luftleitvorrichtung (4) durch Abdeckelemente (23, 24) verschlossen sind.

2. Kraftfahrzeug nach Anspruch 1, dadurch gekennzeichnet, daß die Abdeckelemente (23) für die seitlichen Spaltbereiche (22) durch nach unten abgestellte Wandabschnitte (25) der Luftleitvorrichtung (4) gebildet werden.

3. Kraftfahrzeug nach Anspruch 1, dadurch gekennzeichnet, daß das Abdeckelement (24) für den hinteren Spaltbereich (21) aus zwei gelenkig miteinander verbundenen Teilen (27, 28) besteht, wobei ein Teil (27) an der Luftleitvorrichtung (4) und das andere Teil (28) an einer Verstelleinrichtung (5) für die Luftleitvorrichtung (4) befestigt ist.

4. Kraftfahrzeug nach Anspruch 3, dadurch gekennzeichnet, daß das der Luftleitvorrichtung (4) zugekehrte Teil (27) des Abdeckelementes (24) einstückig mit dieser ausgebildet ist.

5. Kraftfahrzeug nach Anspruch 3, dadurch gekennzeichnet, daß zwischen den beiden Teilen (27, 28) des Abdeckelementes (24) ein Scharnier (30) vorgesehen ist, dessen Achse (31) in Fahrzeugquerrichtung verläuft und etwa horizontal ausgerichtet ist.

6. Kraftfahrzeug nach Anspruch 3, dadurch gekennzeichnet, daß die beiden Teile (27, 28) des Abdeckelementes (24) in eingefahrener Ruhestellung (A) übereinanderliegend angeordnet sind und unter einem spitzen Winkel (α) zueinander verlaufen, wogegen in ausgefahrener Betriebsstellung (B) der Luftleitvorrichtung (4) die beiden Teile (27, 28) des Abdeckelementes (24) einen stumpfen Winkel (β) bilden.

7. Kraftfahrzeug nach Anspruch 3, dadurch gekennzeichnet, daß das Teil (28) des Abdeckelementes (24) über eine Klipsverbindung (32) mit dem Querrohr (29) der Verstelleinrichtung (5) verbunden ist.

## Claims

1. A motor vehicle, in particular a passenger car (1) with a rear engine and an air-guide device (4) arranged in the tail region (3), cooling air being sucked in by means of a fan of the rear engine and flowing through air-inlet openings (13) of the air-guide device to a radiator situated thereunder, characterized in that the air-guide device (4) is movable in a manner known *per se* from a rest position (A) extending flush with the adjacent bodywork (2) into an extended operating position (B), the air-guide device (4) extending in its operating position (B) at a distance from the bodywork (2), and a transversely extending gap region (21) towards the rear as viewed in the direction of travel and a longitudinally extending gap region (22), which lies laterally on the outside between the air-guide device (4) and the bodywork (2), being closed by covering elements (23, 24) in the extended operating position (B) of the air-guide device (4).

2. A motor vehicle according to Claim 1, characterized in that the covering elements (23) for the lateral gap regions (22) are formed by downwardly projecting wall portions (25) of the air-guide device (4).

3. A motor vehicle according to Claim 1, characterized in that the covering element (24) for the rear gap region (21) comprises two parts (27, 28) connected together in an articulated manner, one part (27) being secured to the air-guide device (4) and the other part (28) being secured to an adjustment device (5) for the air-guide device (4).

4. A motor vehicle according to Claim 3, characterized in that the part (27) of the covering element (24) facing the air-guide device (4) is constructed integrally with the latter.

5. A motor vehicle according to Claim 3, characterized in that a hinge (30), the axis (31) of which extends in the transverse direction of the vehicle and is orientated approximately horizontally, is provided between the two parts (27, 28) of the covering element (24).

6. A motor vehicle according to claim 3, characterized in that in the withdrawn rest position (A) the two parts (27, 28) of the covering element (24) are arranged lying one above the other and extend at an acute angle (α) with respect to each other, whereas in the extended operating position (B) of the air-guide device (4) the two parts (27, 28) of the covering element (24) form an obtuse angle (β).

7. A motor vehicle according to Claim 3, the part (28) of the covering element (24) is connected to the transverse tube (29) of the adjustment device (5) by way of a clip connexion (32).

## Revendications

1. Véhicule automobile, en particulier voiture particulière (1) comportant un moteur arrière et un dispositif de guidage de l'air (4) disposé dans la zone arrière, l'air de refroidissement étant aspiré à l'aide d'un ventilateur du moteur arrière et s'écoulant à travers des ouvertures d'entrée d'air (13) du dispositif de guidage de l'air vers un refroidisseur se trouvant audessous, caractérisé en ce que le dispositif de guidage de l'air (4) est susceptible d'être déplacé d'une manière connue, d'une position de repos (A) s'étendant au ras de la carrosserie (2) limitrophe, en une position de fonctionnement (B) déployée, le dispositif de guidage de l'air (4) s'étendant, dans sa position de fonctionnement, (B) à une certaine distance de la carrosserie (2), et en ce qu'une zone d'interstice (21), située à l'arrière dans le sens de déplacement, s'étendant transversalement et des zones d'interstice (22) s'étendant longitudinalement, situées latéralement à l'extérieur, entre le dispositif de guidage de l'air (4) et la carrosserie (2), sont obturées par des éléments de recouvrement (23, 24) dans une position de fonctionnement déployée (B) du dispositif de guidage de l'air (4).

2. Véhicule automobile selon la revendication 1, caractérisé en ce que les éléments de recouvrement (23) destinés aux zones d'interstice latérales (22) sont formés par les parties de cloison (25), placées vers le bas, du dispositif de guidage de l'air (4).

3. Véhicule automobile selon la revendication 1, caractérisé en ce que l'élément de recouvrement (24) de la zone arrière d'interstice (21) se compose de deux parties (27, 28) reliées ensemble de manière articulée, une partie (27) étant fixée au dispositif de guidage de l'air (4) et l'autre partie (28) étant fixée à un dispositif de réglage (5) destiné au dispositif de guidage de l'air (4).

4. Véhicule automobile selon la revendication 3, caractérisé en ce que la partie (27) de l'élément de recouvrement (24) qui est tournée vers le dispositif de guidage de l'air (4) est réalisée d'une seule pièce avec celui-ci.

5. Véhicule automobile selon la revendication 3, caractérisé en ce qu'entre les deux parties (27, 28) de l'élément de recouvrement (24) est prévue une charnière (30), dont l'axe (31) s'étend transversalement au véhicule et est orienté à peu près horizontalement.

6. Véhicule automobile selon la revendication 3, caractérisé en ce que les deux parties (27, 28) de l'élément de recouvrement (24) sont disposées superposées entre elles en position rentrée de repos (A), et s'étendent en faisant l'une par rapport à l'autre un angle aigu ($\alpha$), les deux parties (27, 28) de l'élément de recouvrement (24) formant par contre un angle obtus ($\beta$) dans la position déployée de fonctionnement (B) du dispositif de guidage de l'air (4).

7. Véhicule automobile selon la revendication 3, caractérisé en ce que la partie (28) de l'élément de recouvrement est reliée au tube transversal (29) du dispositif de réglage (5) par l'intermédiaire d'une liaison à attache (32).

FIG.1

FIG.2

EP 0 250 716 B1

FIG.3

FIG.4

EP 0 250 716 B1

FIG.5